(19) **Europäisches Patentamt / European Patent Office / Office européen des brevets**

(11) **EP 4 779 486 A1**

(12) **EUROPEAN PATENT APPLICATION**

(43) Date of publication:
22.07.2026 Bulletin 2026/30

(21) Application number: 26174753.9

(22) Date of filing: 19.11.2019

(51) International Patent Classification (IPC):
$G06F\ 16/11^{(2019.01)}$ $G06F\ 16/2455^{(2019.01)}$

(52) Cooperative Patent Classification (CPC):
G06F 16/11; G06F 16/24561

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 16.09.2019 GB 201913345

(62) Document number(s) of the earlier application(s) in accordance with Art. 76 EPC:
19210126.9 / 3 792 779

(71) Applicant: **Palantir Technologies Inc.**
**Aventura, Florida 33180 (US)**

(72) Inventors:
• JIANG, Jiahui
  Palo Alto, 94301 (US)
• SOUZA, Samuel
  Palo Alto, 94301 (US)
• DALGLEISH, Alexander
  Palo Alto, 94301 (US)
• GOENKA, Aakash
  Palo Alto, 94301 (US)
• GUPTA, Vidit
  Palo Alto, 94301 (US)
• DE HOLANDA, Diogo
  Palo Alto, 94301 (US)
• BAKER, James
  Palo Alto, 94301 (US)
• INOUE, Jim
  Palo Alto, 94301 (US)
• DUFFIELD, Benjamin
  Palo Alto, 94301 (US)
• ELLIOT, Mark
  Palo Alto, 94301 (US)

(74) Representative: **Sayer, Robert David et al**
**Venner Shipley LLP**
**TIDE Bankside**
**8 Emerson Street**
**London SE1 9DU (GB)**

Remarks:
This application was filed on 27.04.2026 as a divisional application to the application mentioned under INID code 62.

(54) **MANAGING DATASET EDITS**

(57) A method, performed by one or more processors, is disclosed comprising receiving, from a first user, a request to create a staging edit to a particular data object stored in a database, and creating a user staging version of the particular data object including the staging edit without editing the particular data object. The method may further comprise storing the staging edit in a memory space and indexing the user staging version in an index for enabling user searching and retrieval of the user staging version responsive to the first user requesting the particular data object.

EP 4 779 486 A1

## Description

### Field of the disclosure

The present disclosure relates to methods and systems for managing dataset edits in relation to datasets in a database, which may include resolution of editing conflicts. Example embodiments may also relate to the indexing of datasets including datasets visible to multiple users of the database and also one or more staging versions of datasets visible to one or a subset of users.

### Background

Cloud computing is a computing infrastructure for enabling ubiquitous access to shared pools of servers, storage, computer networks, applications and other data resources, which can be rapidly provisioned, often over a network, such as the Internet.

For example, a "data resource" as used herein may include any item of data or code (e.g., a data object representing an entity) that can be used by one or more computer programs. In example embodiments, data resources may be stored in one or more network databases and are capable of being accessed by applications hosted by servers that share common access to the network database. A data resource may, for example, be a data analysis application, a data transformation application, a report generating application, a machine learning process, a spreadsheet or a database, or part of a spreadsheet or part of a database, e.g. records or data objects.

Some companies provide cloud computing services for registered organizations, for example, organizations such as service providers, to create, store, manage and execute their own resources via a network. Users within the organization's domain, and other users outside of the customer's domain, e.g., support administrators of the provider company, may perform one or more actions on one or more data resources, which database actions may vary from reading, authoring, editing, transforming, merging, or executing. Sometimes, these resources may interact with other resources, for example, those provided by the cloud platform provider. Certain data resources may be used to control external systems.

In the context of editing datasets in databases, some database management systems (DMSs) require that the relevant dataset be retrieved, edited and then written back before another user can edit that dataset. This can be resource expensive and time consuming if the size or number of datasets is large. Other DMSs may allow users to directly edit datasets in the database, not requiring the above stages, but this can lead to problems if the same dataset is being edited by two users at the same time and/or if one of the users introduces an edit that adversely affects other processes, e.g. the operation of a technical process, manufacturing task or security system that is dependent on the data being edited.

### Summary

According to an aspect, there may be provided a method, performed by one or more processors, comprising:

receiving, from a first user, a request to create a staging edit to a particular data object stored in a database;
creating a user staging version of the particular data object including the staging edit without editing the particular data object;
storing the staging edit in a memory space; and
indexing the user staging version in an index for enabling user searching and retrieval of the user staging version responsive to the first user requesting the particular data object.

Storing the staging edit in a memory space may comprise storing the staging edit such that it is associated with the first user or stored in a memory space associated with the first user.

Indexing the user staging version may comprise adding a document to an index already associated with the particular data object.

The method may further comprise: receiving, from the first or another user, a base edit to be applied directly to the particular data object stored in the database; updating the particular data object stored in the database with the base edit; and if the base edit is for editing part of the particular data object that was edited by the staging edit, not updating the user staging version with the base edit.

The part of the particular data object that was edited by the staging edit may be indicated by metadata generated at the time the staging edit is made.

If the base edit is for editing part of the particular data object that was not edited by the staging edit, the method may comprise updating the user staging version with the base edit.

The method may further comprise maintaining first, second and third queues for the particular data object, each queue comprising a sequence of slots, wherein received base edits and staging edits are respectively entered into the first and second queues in slots, staging edits being offset in the second queue based on the number of prior base edits on the data object, wherein the third queue comprises a merged version of the first and second queues; and storing an index for the user staging version(s) based on the third queue.

The third queue may give priority for staging edits in the second queue over base edits in the first queue in the corresponding slot, a said base edit in the corresponding slot being entered into the next slot of the third queue.

The method may further comprise: receiving a search request for the particular data object from the first user; determining from the index if there are any staging versions of the particular data object for the first user; and responsive to a positive determination, returning search results which include one or more staging versions of the particular data object for the first user.

Responsive to a negative determination, the method may comprise returning the particular data object, or a search result which includes the particular data object.

The method may further comprise: receiving a search request for the particular data object from a second user; determining from the index if there are any staging versions of the particular data object for the second user, ignoring any staging versions for the first user; and responsive to a positive determination, returning search results which include one or more staging versions of the particular data object for the second user.

Responsive to a negative determination, the method may further comprise returning the particular data object, or a search result which includes the particular data object.

The method may further comprise generating metadata for the particular data object and its one or more staging versions including an identifier field, wherein the one or more staging versions comprise an identifier indicative of a staging version.

The method may further comprise executing one or more data transforms on the staging version and producing staging output resulting from the execution.

The one or more data transforms may take as input data from the staging version and apply the output to data of one or more other data objects in the database, the produced staging output not causing modification of the one or more other data objects in the database.

The produced staging output may be stored in a memory space associated with the user, the staging output being associated with the staging version such that searching and/or retrieval of the staging version is performed also on the staging output.

The method may further comprise receiving, at a subsequent time, an instruction from the first user to update the particular data object with a selected staging version(s), and responsive thereto, updating the particular data object with the edits made in the selected staging version(s) and deleting the selected staging version(s) from the memory space associated with the user.

According to another aspect, there may be provided a computer program, optionally stored on a non-transitory computer readable medium program which, when executed by one or more processors of a data processing apparatus, causes the data processing apparatus to carry out a method according to any preceding definition.

According to another aspect, there may be provided an apparatus configured to carry out a method according to any preceding definition, the apparatus comprising one or more processors or special-purpose computing hardware.

**Brief Description of the Drawings:**

Example embodiments will now be described by way of non-limiting example with reference to the accompanying drawings, in which:

FIG. 1 is a block diagram illustrating a network system comprising a group of application servers of a data processing platform according to some embodiments of this specification;
FIG. 2 is a block diagram of a computer system according to embodiments of this specification;
FIG. 3 is a representational view of part of a database, comprising a dataset;
FIG. 4 is block diagram of functional elements of part of the FIG. 1 network system, including a database application according to example embodiments;
FIG. 5 is a schematic diagram of a data object and a plurality of example edits that may be made to the data object through the database application according to example embodiments;
FIG. 6 is a schematic diagram of a tree structure, indicative of how the FIG. 5 example edits may be managed and stored by the database application according to example embodiments;
FIG. 7 is a schematic view of how properties of base and workstate versions on the data object may change, responsive to the FIG. 5 edits;
FIG. 8 is a schematic view representing the status of the data object and workstate subsequent to edits mentioned with regard to FIG. 7;
FIG. 9 is a block diagram showing functional elements of the database application according to example embodiments;
FIG. 10 is a schematic view of queues employed by the database application according to example embodiments; and
FIG. 11 is a flow diagram indicating processing operations performed by the database application according to example embodiments.

**Detailed Description of Certain Embodiments**

Embodiments herein relate to methods and systems for managing dataset edits in relation to datasets in a database. A dataset may refer to a data object which may, for example, represent a row in a database table. Example embodiments may also relate to the indexing of datasets including datasets visible to multiple users of the database and also one or more staging versions of datasets visible only to one or a subset of users.

Embodiments herein may also relate to indexing and searching. The methods and systems are particularly applicable and useful to large-scale distributed systems, for example where multiple applications or services are located and/or executed on multiple servers and/or at multiple locations. However, embodiments are also applicable to smaller systems.

Embodiments herein involve a database platform or application that may interface with one or more databases to permit direct editing of data objects. Direct editing means that users may edit particular data objects, e.g. one or more rows, in the database without having to retrieve, edit and then write-back the relevant table or document, which can be resource and time consuming. In one example, this latter process is an Apache Spark job.

The database platform or application may be configured to receive, from a first user, a request to create a staging edit to a particular data object stored in a database. A staging edit is an edit that does not affect the particular data object in the database, as may be the default, but rather creates a new version of the data object for the user to edit and test. The data object can be a row of a table. Responsive to this, the platform or application may create a user staging version of the particular data object, including the staging edit, without editing the particular data object. That user staging version may be stored, including the staging edit, in a memory space associated with the first user. This memory space may be a memory space of the database or a separate memory space. In some embodiments, the staging edit or edits may be stored in a different database table to the original data, with the staging version comprising the original data and the staging edits combined. The staging edits may be indexed and available for searching through a query. Usually, this means that the user staging version will not be visible to other users or is only visible to a subset of users, e.g. those in a particular team. An index may be created for the user staging version and the index may be stored for enabling user searching and retrieval of the user staging version responsive to the first user requesting the particular data object. In some embodiments, the same index is used as for the original data and the staging edits are effectively indexed by adding additional data, e.g. a document, to said index. In this way, a new index need not be created.

The particular data object may be referred to as a base object. User staging versions may be visualized as branches deriving from the base object and may be referred to herein as workstates. Workstates may derive from other previous workstates to create additional branches for the same user. Other users may create their own workstate branches. Base objects may be visible to all users and direct edits to those base objects may occur as before, such edits being referred to as base edits. Such base edits may propagate to workstates provided they do not modify parts of the object that have been edited in the workstate branch or branches. Such parts may comprise data elements, such as a column value which may refer, for example, a property value. Workstates may be visible only to the user or users that created them and possibly by other users or user groups that the creating user shares the workstate with.

In terms of identification, the data object in a workstate may comprise metadata which is generated when the workstate is created. The metadata may be used to indicate one or more of: that it is a workstate, an index of the workstate (i.e. what branch level it is), and the particular part(s) or data element(s) that have been modified in that branch. The metadata may also identify the user or team that created the workstate and therefore indicate who is permitted to view it. The base object may have metadata, but the absence of any workstate field may be useful in the searching process to enable its identification as a base object.

As such, notwithstanding the type of database and/or DMS, users are permitted, in addition to being able to directly edit data, to create one or more of their own staging versions for test purposes and also index them for subsequent searching, e.g. through a proprietary search engine system such as Elasticsearch (RTM). Also, when searching for the particular data object, only the staging version or versions may be displayed and/or retrieved in search result, at least initially. When a user performs a search, staging versions are searched, i.e. those edited in a workstate, and only those versions are given back as results if they exist. Otherwise, the original 'base' versions are returned. Only one base version of each object is in the index at a given time. Searching through original 'base' versions, of which there are likely to be many, will require greater computational resources for searching the entire index as opposed to searching only the index associated with the user storage area. Thus, if there is a staging version for the user, it will be found quicker, use less computational resources, and will be more relevant for the user. The user may also be able to quickly traverse to the base version of the data object directly from the staging version without going through a more general search in the main index.

Example embodiments may also involve receiving, from the first or another user, a base edit to be applied directly to the particular data object stored in the database, updating the particular data object stored in the database with the base edit, and, if the base edit is for editing part of the particular data object that was edited by the staging edit, not updating the user staging version with the base edit. In this way, the staging version is not affected by subsequent edits made to the base version, e.g. by another user, although it may be by the same user in theory. This maintains consistency of the data in respect of the part of the data object that was edited. The part of the particular data object that was edited by the staging edit may be indicated by metadata generated substantially at the time the staging edit is made.

In some embodiments, if the base edit is for editing part of the particular data object that was not edited by the staging edit, the user staging version may be updated with the base edit. This again maintains consistency of the data object that the user is using for test purposes, providing that their own staging edit is not affected.

In some embodiments, this may be achieved by maintaining first, second and third queues for the particular data object, each queue comprising a sequence of slots, wherein received base edits and staging edits are respectively entered into the first and second queues in slots, staging edits being offset in the second queue based on the number of prior base edits on the data object. The third queue may comprise a merged version of the first and second queues. The user staging version(s) and/or the index may be based on the third queue to maintain consistency in terms of what is and is not propagated to particular user branches.

The data objects may comprise data representing any type of data, for example data that is generated by humans or by machines. For example, the data objects may be derived from one or more datasets representing computer logs that are employed for security purposes, e.g. login requests, authentication and/or virus protection. For example, the data objects may be derived from one or more datasets generated by a sensor associated with a manufacturing process or plant. The data objects in the database may be automatically processed by one or more transforms, performing all or part of a workflow that produces data output for controlling one or more other machines. Erroneous data, that is data that may not confirm to a particular schema, which contains nulls, or too many nulls, or may be outside of an expected range or format, may produce erroneous results further along the workflow which may, for example, cause a computer terminal or network to crash, may allow viruses to propagate in a network or may cause a manufacturing plant or machine to stop working.

A transform is any code or other data resource that changes an input data object into different data, e.g. by merging or unioning two data objects or applying some other mathematical process that may generate a new result.

Particular embodiments will now be described with reference to the Figures.

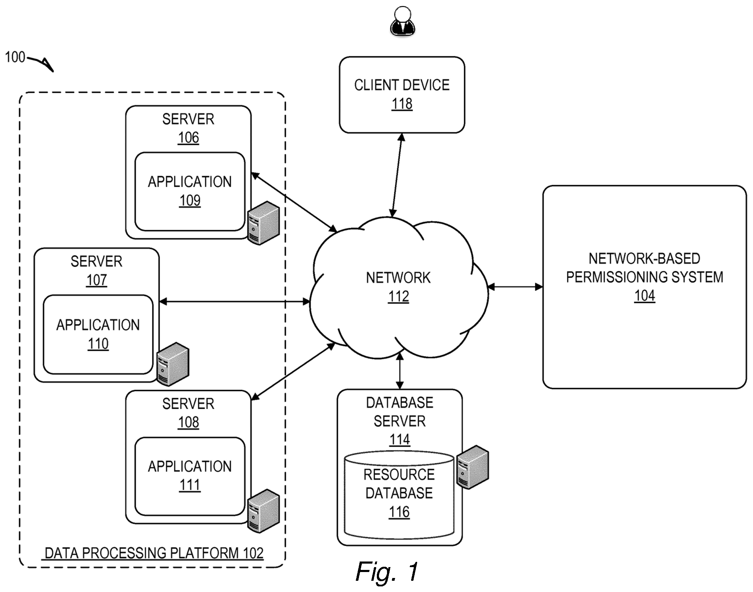

FIG. 1 is a network diagram depicting a network system 100 comprising a data processing platform 102 in communication with a network-based permissioning system 104 (hereafter "permissioning system") configured for registering and evaluating access permissions for data resources to which a group of application servers 106-108 share common access, according to an example embodiment. Consistent with some embodiments, the network system 100 may employ a client-server architecture, though the present subject matter is, of course, not limited to such an architecture, and could equally well find application in an event-driven, distributed, or peer-to-peer architecture system, for example. Moreover, it shall be appreciated that although the various functional components of the network system 100 are discussed in the singular sense, multiple instances of one or more of the various functional components may be employed.

The data processing platform 102 includes a group of application servers, specifically, servers 106-108, which host network applications 109 -111, respectively. The network applications 109-111 hosted by the data processing platform 102 may collectively compose an application suite that provides users of the network system 100 with a set of related, although independent, functionalities that are accessible by a common interface. For example, the network applications 109-111 may compose a suite of software application tools that can be used to analyse data to develop various insights about the data, and visualize various metrics associated with the data. To further this example, the network application 109 may be used to analyse data to develop particular metrics with respect to information included therein, while the network application 110 may be used to render graphical representations of such metrics. It shall be appreciated that although Figure 1 illustrates the data processing platform 102 as including a particular number of servers, the subject matter disclosed herein is not limited to any particular number of servers and in other embodiments, fewer or additional servers and applications may be included.

The applications 109-111 may be associated with a first organisation. One or more other applications (not shown) may be associated with a second, different organisation. These other applications may be provided on one or more of the application servers 106, 107, 108 which need not be specific to a particular organisation. Where two or more applications are provided on a common server 106-108 (or host), they may be containerised which as mentioned above enables them to share common functions.

Each of the servers 106-108 may in communication with the network-based permissioning system 104 over a network 112 (e.g. the Internet or an intranet). Each of the servers 106-108 are further shown to be in communication with a database server 114 that facilitates access to a resource database 116 over the network 112, though in other embodiments, the servers 106-108 may access the resource database 116 directly, without the need for a separate database server 114. The resource database 116 may stores other data resources that may be used by any one of the applications 109-111 hosted by the data processing platform 102.

In other embodiments, one or more of the database server 114 and the network-based permissioning system 104 may be local to the data processing platform 102; that is, they may be stored in the same location or even on the same server or host as the network applications 109, 110, 111.

As shown, the network system 100 also includes a client device 118 in communication with the data processing platform 102 and the network-based permissioning system 104 over the network 112. The client device 118 communicates and exchanges data with the data processing platform 102.

The client device 118 may be any of a variety of types of devices that include at least a display, a processor, and communication capabilities that provide access to the network 112 (e.g., a smart phone, a tablet computer, a personal digital assistant (PDA), a personal navigation device (PND), a handheld computer, a desktop computer, a laptop or netbook, or a wearable computing device), and may be operated by a user (e.g., a person) to exchange data with other components of the network system 100 that pertains to various functions and aspects associated with the network system 100 and its users. The data exchanged between the client device 118 and the data processing platform 102 involve user-selected functions available through one or more user interfaces (UIs). The UIs may be specifically associated with a web client (e.g., a browser) or an application 109-111 executing on the client device 118 that is in communication with the data processing platform 102. For example, the network-based permissioning system 104 provides user interfaces to a user of the client device 118 (e.g., by communicating a set of computer-readable instructions to the client device 118 that cause the client device 118 to display the user interfaces) that allow the user to register policies associated with data resources stored in the resource database 116.

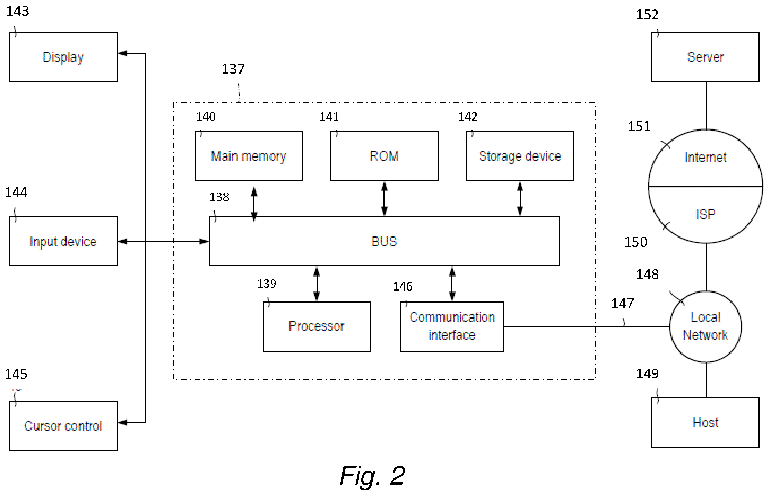

Referring to FIG. 2, a block diagram of an exemplary computer system 137, which may comprise the data processing platform 102, one or more of the servers 106-108, the database server 114 and/or the network-based permissioning system 104, consistent with examples of the present specification is shown.

Computer system 137 includes a bus 138 or other communication mechanism for communicating information, and a hardware processor 139 coupled with bus 138 for processing information. Hardware processor 139 can be, for example, a general purpose microprocessor. Hardware processor 139 comprises electrical circuitry.

Computer system 137 includes a main memory 140, such as a random access memory (RAM) or other dynamic storage device, which is coupled to the bus 138 for storing information and instructions to be executed by processor 139. The main memory 140 can also be used for storing temporary variables or other intermediate information during execution of instructions by the processor 139. Such instructions, when stored in non-transitory storage media accessible to the processor 139, render the computer system 137 into a special-purpose machine that is customized to perform the operations specified in the instructions.

Computer system 137 further includes a read only memory (ROM) 141 or other static storage device coupled to the bus 138 for storing static information and instructions for the processor1 139. A storage device 142, such as a magnetic disk or optical disk, is provided and coupled to the bus 138 for storing information and instructions.

Computer system 137 can be coupled via the bus 138 to a display 143, such as a cathode ray tube (CRT), liquid crystal display, or touch screen, for displaying information to a user. An input device 144, including alphanumeric and other keys, is coupled to the bus 138 for communicating information and command selections to the processor 139. Another type of user input device is cursor control 145, for example using a mouse, a trackball, or cursor direction keys for communicating direction information and command selections to the processor 139 and for controlling cursor movement on the display 143. The input device typically has two degrees of freedom in two axes, a first axis (for example, x) and a second axis (for example, y), that allows the device to specify positions in a plane.

Computer system 137 can implement the techniques described herein using customized hard-wired logic, one or more ASICs or FPGAs, firmware and/or program logic which in combination with the computer system causes or programs computer system 137 to be a special-purpose machine. According to some embodiments, the operations, functionalities, and techniques disclosed herein are performed by computer system 137 in response to the processor 139 executing one or more sequences of one or more instructions contained in the main memory 140. Such instructions can be read into the main memory 140 from another storage medium, such as storage device 142. Execution of the sequences of instructions contained in main memory 140 causes the processor 139 to perform the process steps described herein. **In** alternative embodiments, hard-wired circuitry can be used in place of or in combination with software instructions.

The term "storage media" as used herein refers to any non-transitory media that stores data and/or instructions that cause a machine to operate in a specific fashion. Such storage media can comprise non-volatile media and/or volatile media. Non-volatile media includes, for example, optical or magnetic disks, such as storage device 142. Volatile media includes dynamic memory, such as main memory 140. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from, but can be used in conjunction with, transmission media. Transmission media participates in transferring information between storage media. For example, transmission media includes coaxial cables, copper wire and fibre optics, including the wires that comprise bus 138. Transmission media can also take the form of acoustic or light waves, such as those generated during radio-wave and infra-red data communications.

Various forms of media can be involved in carrying one or more sequences of one or more instructions to processor 139 for execution. For example, the instructions can initially be carried on a magnetic disk or solid state drive of a remote computer. The remote computer can load the instructions into its dynamic memory and send the instructions over a telephone line or other transmission medium using a modem. A modem local to computer system 137 can receive the data on the telephone line or other transmission medium and use an infra-red transmitter to convert the data to an infra-red signal. An infra-red detector can receive the data carried in the infra-red signal and appropriate circuitry can place the data on bus 138. Bus 138 carries the data to the main memory 140, from which the processor 139 retrieves and executes the instructions. The instructions received by the main memory 140 can optionally be stored on the storage device 142 either before or after execution by the processor 139.

Computer system 137 also includes a communication interface 146 coupled to the bus 138. The communication interface 146 provides a two-way data communication coupling to a network link 147 that is connected to a local network 148. For example, the communication interface 146 can be an integrated services digital network (ISDN) card, cable modem, satellite modem, or a modem to provide a data communication connection to a corresponding type of telephone line. As another example, the communication interface 146 can be a local area network (LAN) card to provide a data communication connection to a compatible LAN. Wireless links can also be implemented. In any such implementation, the communication interface 146 sends and receives electrical, electromagnetic or optical signals that carry digital data streams representing various types of information.

The network link 147 typically provides data communication through one or more networks to other data devices. For example, the network link 147 can provide a connection through the local network 148 to a host computer 149 or to data equipment operated by an Internet Service Provider (ISP) 150. The ISP 150 in turn provides data communication services through the world wide packet data communication network now commonly referred to as the "Internet" 151. The local network 148 and internet 151 both use electrical, electromagnetic or optical signals that carry digital data streams. The signals through the various networks and the signals on the network link 147 and through the communication interface 146, which carry the digital data to and from the computer system 137, are example forms of transmission media.

The computer system 137 can send messages and receive data, including program code, through the network(s), network link 147 and communication interface 146. For example, a first application server 106 may transmit data through the local network 148 to a different application server 107, 108.

One of said applications 109, 110, 111 or another application may provide a database application according to example embodiments. The database application may be a stand-alone or web-based platform, the latter being accessible to multiple users at respective different locations.

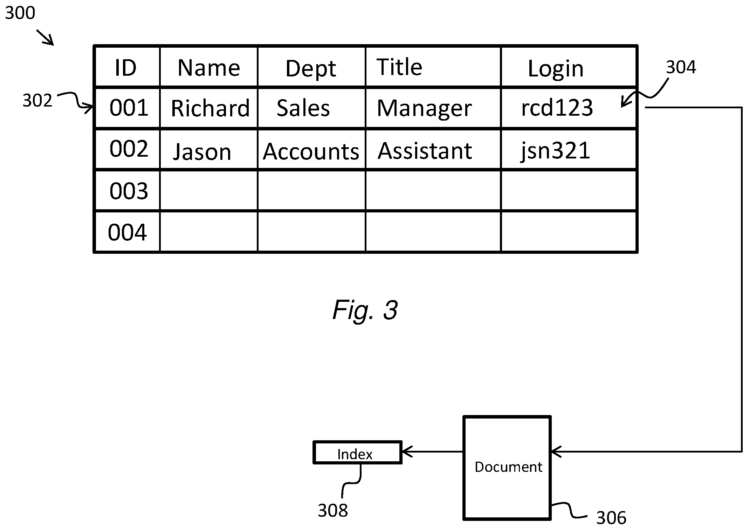

FIG. 3 is a representational view of part of a database comprising a dataset 300. The dataset 300 may be represented as a table comprising rows and columns or may comprise a graph object or any other data representation. The former will be assumed herein. Each row may refer to a particular data object 302 and every column for that row may represent a property of the data object, for example an identifier, a name, a department, a job title and a system login. Each data element 304 at the intersection of the rows and columns comprises a value for the property. Some data element 304 may be nulls. A database schema may be associated with the database for maintaining consistency in terms of how ingested datasets are stored in the database, for example in terms of what the type of data is, how it is formatted and/or how one or more rows and/or columns relate to other tables.

Data objects 302 in the database may be indexed to facilitate searching. There are various schemes and proprietary systems for indexing and searching. We will refer to the example of Elasticsearch (RTM), which functions by representing data objects 302 as JavaScript Object Notation (JSON) documents 306, each of which is indexed, e.g. by a unique row number or identifier. The resulting index 308 may be divided into shards distributed over one or more multiple nodes and a collection of shards may be referred to as a cluster.

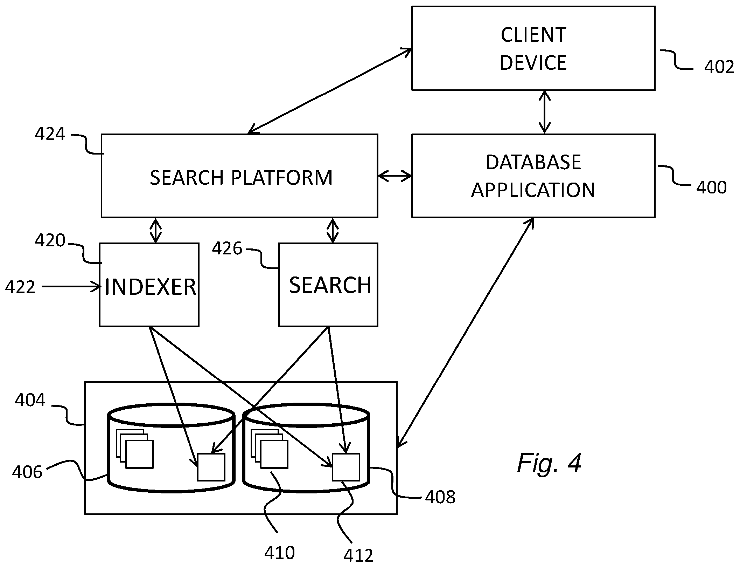

FIG. 4 shows a database application 400 according to example embodiments, within a computer network that may comprise part of the FIG. 1 computer network. The database application 400 may receive requests or queries from one or more client devices 402 via a user interface to edit data objects in a database 404. A write operation may be considered an edit operation, as well as the modification of existing data. Read operations may also be performed. The database 404 may be divided into a cluster of database nodes or shards 406, 408, each storing a plurality of the data objects as, for example, JSON documents 410 and having an associated index 412. The index 412 may be created by an indexer node 420 as data is ingested (indicated by the arrow 422) or on existing data in the relevant node 406, 408. The index may also be updated by the database application 400. In response to a search request made through a client device 402 via a search platform 424, a search node 426 searches through each index to locate one or more documents associated with the search request. The search node 426 may operate according to known algorithms which may be based on queries made via a suitable user interface presented on the client device 402. One or more filters may be applied by the search node 426 to determine which types of search results are retrieved. The database application 400 may communicate via respective application programming interfaces (APIs) with the search platform 424 and the database 404.

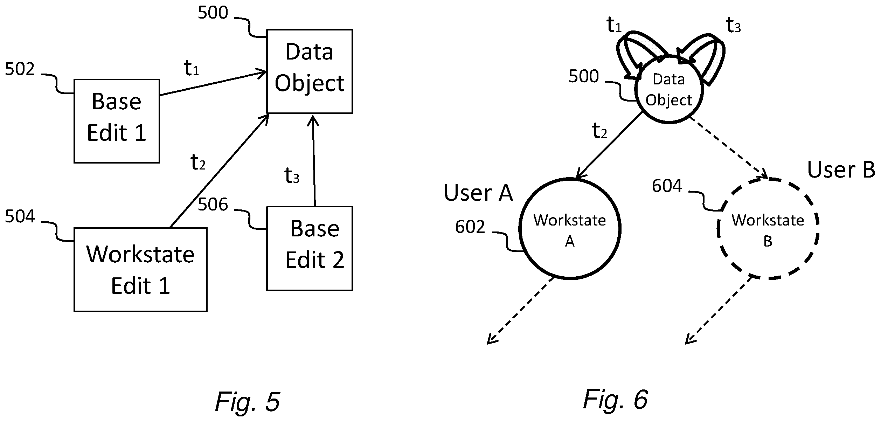

FIG. 5 shows schematically an editing process that may be performed by the database application 400 for three sequential user edits to a particular data object 500 by one or more users.

A first user edit 502, at time=t1, may comprise a first base edit, which is an edit made directly to one or more data elements of the data object 500, e.g. to change a property value. This updates the relevant data element(s) of the data object in the database 404.

A second user edit 504, at time=t2, may comprise a first workstate edit to one or more data elements of the data object 500 made by a particular user. The second user edit 504 may be invoked by the particular user to create a staging version of the data object 500 visible only to the user, for example to test the edit against one or more transformations provided as part of a processing pipeline.

A third user edit 506, at time=t3, may comprise a second base edit, being another edit made directly to one or more data elements of the data object 500.

FIG. 6 shows graphically the result of this sequence of first to third user edits 502, 504, 506. The data object 500 is updated at time= t1 and t3 by the base user edits 502, 506. A first workstate "A" 602 is generated as a staging version by the database application 400. It may be referred to as a branched version because it branches-off from a higher-order version, in this case the base data object 500.

One or more other workstates, e.g. workstate "B" 604 may be created by other users.

Subsequent edits made to a workstate, which may be referred to as "workstate edits" by the relevant user may create new workstates with a higher index, e.g. workstate A2 etc.

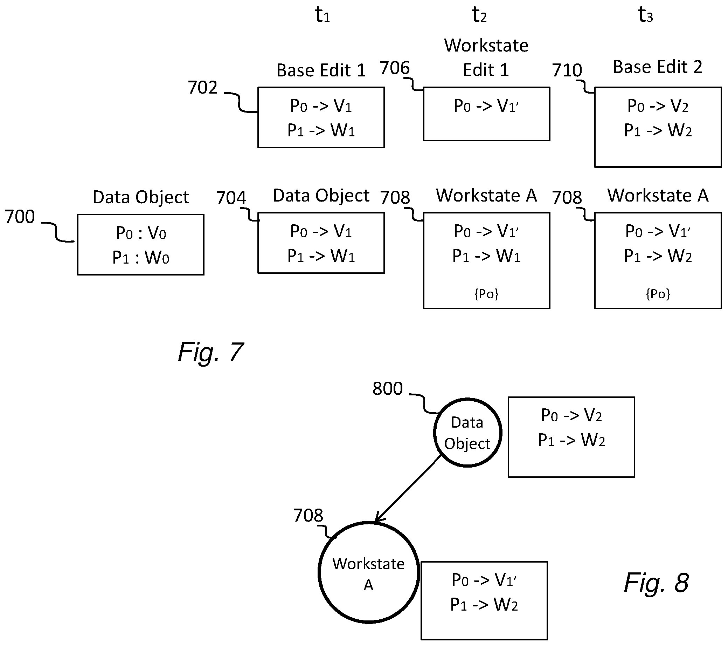

It is however important, in creating such workstates, to maintain a global view of particular workstates, notwithstanding that multiple users may be operating at any one time, or between times when the database indexes are being updated, and on base objects and workstate versions of the objects. This is handled in example embodiments by the database application 400 maintaining a set of queues to be explained later on. FIG. 7 shows graphically how the process may work in practice.

At an initial time, a "base" data object 700 is shown, comprising two data elements, namely $P_0:V_0$, and $P_1:W_0$, where $P_n$ is a property and $V/W_m$ is a value for that property. At a first time instance time=t1, a base edit 702 is received via the database application 400 to update $P_0:V_1$, and $P_1:W_1$. The database application 400 may operate to directly update the data object 700 in the database 404 to an updated version 704 of the data object. At a second time instance, time=t2, a workstate edit 706 is received via the database application 400 to

update $P_0:V_1$'. The database application 400 may operate to cause creation of a staging, or workstate version "A" 708 in a workspace associated with the editing user. This may be by means of the database application 400 reading the current version via the index 412, applying the edits, and then re-writing the edits back to the indexing system. The workstate version 708 comprises the edit, and the value of $P_1:W_1$ remains unchanged. Metadata may be created for the workstate version 708, including an identifier for the workstate, e.g. WS1, and a value indicating the edited data element or property $\{P_0\}$. At a third time instance, time=t3, a second base edit 710 is received, either from the same user or a different user, to update $P_0:V_2$, and $P_1:W_2$. The database application 400 may operate to update the workstate version 708 only to change the value of $P_1$. In this way, the metadata {Po} associated with the workstate version 708 prevents the second, subsequent base edit 710 from affecting the workstate version 708 but permits propagation of the other base edit to reflect an updated view of the workstate version for consistency.

FIG. 8 represents the status of both the data object 800 following all three edits mentioned with regard to FIG. 7, and the workstate version 708 as the branch version.

The workstate version 708 may be indexed either by the database application 400 or by the indexer node 420 shown in FIG. 4. This creates a separate index to permit the user to access their one or more workstates responsive to a search request made via the search platform 424.

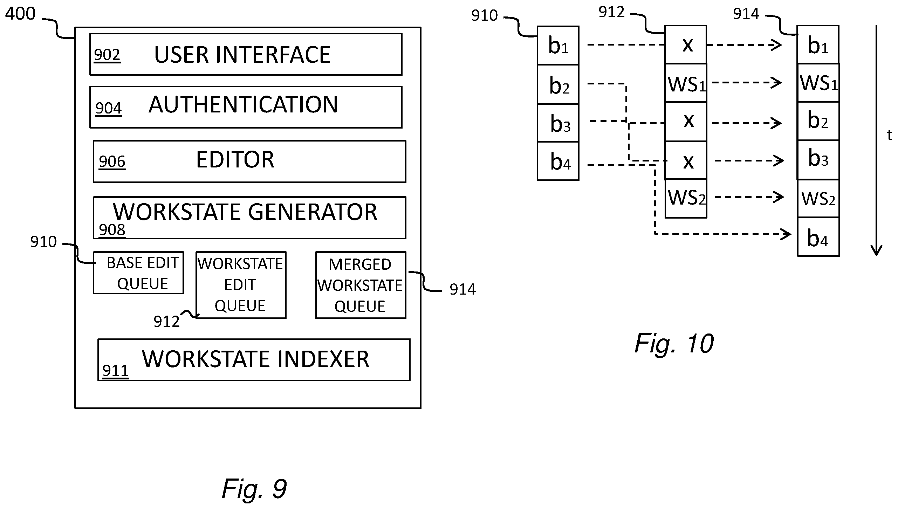

FIG. 9 is a block diagram showing functional elements of the database application 400. It comprises a user interface 902, an authentication module 904, an editor module 906, a workstate generator 908, a base edit queue 910, a workstate edit queue 912, a merged workstate queue 914 and a workstate indexer 911. The number and type of functional elements is given as an example, and a greater or smaller number may be provided.

The user interface 902 provides a user front-end for users of the client devices 402 to interact, e.g. view, edit, create data objects in the database 404. The user interface 902 may also provide a text entry field for search requests which are linked to the search platform 424, enabling users to enter search queries and to view the results of those search queries in any suitable form on the user interface 902.

The authentication module 904 may be configured to redirect users, upon opening the database application 400, to a login page. The login page may request a username and password or other form of credentials. The username and password may be sent to the network-based permissioning system 104 shown in FIG. 1 to identify and authenticate the user. If authenticated, the user may be provided with the functionality of the database application 400, which may be restricted in some cases depending on any permissions that are associated with that user. For example, some users may not be able to create new data objects or edit data objects. Some users may not be able to directly edit base data objects, and only workstates may be created responsive to an editing operation.

The editor module 906 provides a text-entry interface for directly editing data objects in the database 404 and may comprise some means of signalling to the application that a workstate or staging version is to be created. Conversely, edits by default may generate workstates and signalling may be required to directly edit data objects. This signalling may be by means of a statement in entered code or by selecting an icon or checkbox.

The workstate generator 908 works responsive to a signal from the editor module 906, or by default, to generate a workstate version of the particular data object identified in the edit received through the editor module. This may include determining an available part of memory space and reserving it for the user and their workstate version of the particular data object. The workstate generator 908 may also generate metadata, including an index, e.g. first workstate branch A, subsequent workstate A2, second workstate branch B, and so on. The workstate generator 908 may also maintain metadata regarding the particular data elements that are edited in accordance with the example mention in relation to FIGS. 7 and 8.

The base edit queue 910, the workstate edit queue 912, and the merged workstate queue 914 will now be described with reference to FIG. 10. Each said queue 910, 912, 914 comprises a plurality of sequential slots which relate to edits adjacent in time. The base edit queue 910 simply stores all base edits, e.g. four base edits in this case. These are entered into each adjacent slot of the base edit queue 910 regardless of timing relative to workstate edits. The workstate edit queue 912 is different in that it offsets workstate edits based on base edits that occurred prior to it.

So, for example, the entries shown in the base edit queue 910 and workstate edit queue 912 of FIG. 10 reflect the following sequence of edits:

$$b1 \rightarrow WS1 \rightarrow b2 \rightarrow b3 \rightarrow WS2 \rightarrow b4.$$

It will be seen, therefore, that the workstate edit queue 912 comprises nulls or offsets at the slots corresponding to b2 and b3 in the received edit sequence.

The merged workstate queue 914 represents the formation of the combined edits into a time-ordered sequence of edits that the particular workstate should comprise. Where workstates occur, these take precedence over base edits in the corresponding slot which are only applied in a later null slot. The base edit queue 910 therefore maintains a global view of edits made to the base data object, whereas the merged workstate queue 914 maintains a user-specific view of the workstate in question.

This approach is more storage efficient, because the merged workstate queue 914 is not stored but computed on-the-fly based on the base edit queue 910 and the workstate edit queue 912. For all workstate edit queues 912, only one copy of the base edit queue 910 is needed. So, in situations where the base edit queue 910 has lots of edits and/or there are many workstate edit queues 912, much storage space is saved.

The workstate indexer 911 may provide new documents or other data structures of the edited data object for each workstate to the indexer node 420 for providing a new index for each workstate, and indeed each version of the workstate associated with a particular user. The indexer node 420 may update or generate a new index for the workstates, identify the user to whom the workstates are assigned, i.e. who created them, and the document or documents the index points to, as well as other metadata useful for the searching node 426. In some embodiments, the indexer node 420 may update the index that already contains the base view of the data object, but inserts more documents that contain the workstate view of the objects edited in a workstate. When a new workstate is created, a new index need not be created and have objects indexed to it. When a base edit is applied to a data object, only one document needs updating in this one index, instead of one document per index related to the object type.

To aid searching, this may involve generating for each base object metadata indicating any workstates created therefrom, and/or generating for each workstate metadata indicating the base data object.

When a user wishes to perform tasks or further edits on a particular data object, they may use the database application 400 or another application. For example, the use may wish to test selected workstates as staging data on one or more transformations of a processing pipeline.

Again, identification of the user may be performed with the aid of the network-based permissioning system 104 shown in FIG. 1 to identify and authenticate the user. Upon identification of the user, they may search for a particular data object to view or to edit. Responsive to receiving a search string, the database application 400 may actually modify or handle the search to return only workstates rather than base objects in the results list. This may be handled by a filter which returns, for a specified data object, only workstates and not the base object provided one or more workstates exists associated with that user. Workstates for other users may not appear in the search results. If no workstates exist for the data object, then the base object may be returned in the search results.

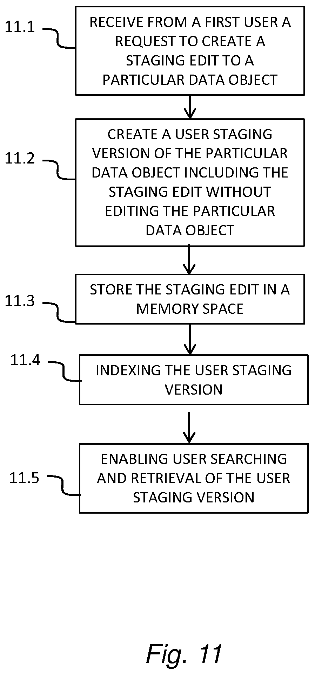

FIG. 11 is a flow diagram indicating processing operations performed by one or more processors of an appropriate computing system, for example using the system shown in FIG. 2, and may describe operations performed by the database application 400 or another application or system described herein.

A first operation 11.1 may comprise receiving, from a first user, a request to create a staging edit to a particular data object stored in a database.

Another operation 11.2 may comprise creating or computing a user staging version of the particular data object including the staging edit without editing the particular data object.

Another operation 11.3 may comprise storing the user staging edit in a memory space. This may comprise storing the user staging version including the staging edit in a memory space associated with the first user or by some other means of linking or associating the staging edit to the first user. This may comprise storing only the staging edit made to the base data object in the database. The staging edit or edits may be stored in a different database table to the original base data.

Another operation 11.4 may comprise indexing the user staging version which may comprise updating the existing index comprising the base version, e.g. to add one or more additional documents referring to the staging edits. This avoids having to create a new index and means that searching performed on the index will return the user staging version.

Another operation 11.5 may comprise using the index for enabling user searching and retrieval of the user staging version responsive to the first user requesting the particular data object.

Another optional operation may further include comprising executing one or more data transforms on the staging version and producing staging output resulting from the execution. The one or more data transforms may take as input data from the staging version and apply the output to data of one or more other data objects in the database, or one or more other staging versions, the produced staging output not causing modification of the one or more other base data objects in the database. The produced staging output may be stored in a memory space associated with the user, the staging output being associated with the staging version such that searching and/or retrieval of the staging version is performed also on the staging output. Users may therefore store and retrieve output related to a particular staging implementation and compare with re-run results of other versions.

Another optional operation may further include receiving, at a subsequent time, an instruction from the first user to update the particular base data object with a selected staging version(s), and responsive thereto, updating the particular data object with the edits made in the selected staging version(s) and manually or automatically deleting the selected staging version(s) from the memory space associated with the user.

It will be appreciated that certain operations may be omitted or reordered in some embodiments.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

The various features and processes described above may be used independently of one another, or may be combined in various ways. All possible combinations and sub combinations are intended to fall within the scope of this disclosure. **In** addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

The following clauses form part of the disclosure.

1. A method, performed by one or more processors, comprising:

receiving, from a first user, a request to create a staging edit to a particular data object stored in a database;
creating a user staging version of the particular data object including the staging edit without editing the particular data object;
storing the staging edit in a memory space; and
indexing the user staging version in an index for enabling user searching and retrieval of the user staging version responsive to the first user requesting the particular data object.

2. The method of clause 1, wherein storing the staging edit in a memory space comprises storing the staging edit such that it is associated with the first user or stored in a memory space associated with the first user.

3. The method of clause 1 or clause 2, wherein indexing the user staging version comprises adding a document to an index already associated with the particular data object.

4. The method of any preceding clause, further comprising:

receiving, from the first user or another user, a base edit to be applied directly to the particular data object stored in the database;
updating the particular data object stored in the database with the base edit; and
if the base edit is for editing part of the particular data object that was edited by the staging edit, not updating the user staging version with the base edit.

5. The method of clause 4, wherein the part of the particular data object that was edited by the staging edit is indicated by metadata generated at the time the staging edit is made.

6. The method of clause 4 or clause 5, wherein if the base edit is for editing part of the particular data object that was not edited by the staging edit, updating the user staging version with the base edit.

7. The method of clause 6, further comprising:

maintaining first, second and third queues for the particular data object, each queue comprising a sequence of slots, wherein received base edits and staging edits are respectively entered into the first and second queues in slots, staging edits being offset in the second queue based on a number of prior base edits on the particular data object, wherein the third queue comprises a merged version of the first and second queues; and
indexing the user staging version(s) based on the third queue.

8. The method of clause 7, wherein the third queue gives priority for staging edits in the second queue over base edits in the first queue in the corresponding slot, a said base edit in the corresponding slot being entered into the next slot of the third queue.

9. The method of any preceding clause, further comprising:

receiving a search request for the particular data object from the first user;
determining from the index if there are any staging versions of the particular data object for the first user; and
responsive to a positive determination, returning search results which include one or more staging versions of the particular data object for the first user.

10. The method of clause 9, wherein responsive to a negative determination,
the method comprises returning the particular data object, or a search result which includes the particular data object.

11. The method of clause 9 or clause 10, further comprising:

receiving a search request for the particular data object from a second user; and
determining from the index if there are any staging versions of the particular data object for the second user, ignoring any staging versions for the first user; and
responsive to a positive determination, returning search results which include one or more staging versions of the particular data object for the second user.

12. The method of clause 11, wherein responsive to a negative determination, returning the particular data object, or a search result which includes the particular data object.

13. The method of any preceding claim, further comprising generating metadata for the particular data object and its one or more staging versions including an identifier field, wherein the one or more staging versions comprise an identifier indicative of a staging version.

14. A computer program, optionally stored on a non-transitory computer readable medium program which, when executed by one or more processors of a data processing apparatus, causes the data processing apparatus to carry out a method according to any preceding clause.

15. Apparatus configured to carry out a method according to any of clauses 1 to 13, the apparatus comprising one or more processors or special-purpose computing hardware.

**Claims**

1. A method, performed by one or more processors, comprising:

   receiving, from a first user, a request to create a staging edit to a particular data object stored in a database;
   creating a user staging version of the particular data object, being a new version of the particular data object including the edit to change one or more data elements of the new version of the particular data object without changing the particular data object stored in the database and generating metadata indicating the changed one or more data elements;
   storing the user staging version in a memory space;
   indexing the user staging version in an index for enabling user searching and retrieval of the user staging version responsive to the first user requesting the particular data object;
   receiving a search request for the particular data object from the first user;
   determining from the index that the user staging version of the particular data object is stored in the memory space; and
   returning search results which include the user staging version of the particular data object and not the particular data object stored in the database.

2. The method of claim 1, wherein storing the staging edit in a memory space comprises storing the staging edit such that it is associated with the first user or stored in a memory space associated with the first user.

3. The method of claim 1 or claim 2, wherein indexing the user staging version comprises adding a document to an index already associated with the particular data object.

4. The method of any preceding claim, further comprising:

   receiving, from the first user or another user, a base edit, the base edit being an edit to be applied directly to one or more elements of the particular data object stored in the database;
   updating the one or more data elements of the particular data object stored in the database with the base edit,
   wherein, by use of the metadata indicating the changed one or more data elements,
   if the base edit is for editing one or more data elements of the particular data object that was edited by the staging edit, the method further comprises not updating the user staging version with the base edit.

5. The method of claim 4, wherein if the base edit is for editing one or more data elements of the particular data object that was not edited by the staging edit, the method further comprises updating the user staging version with the base edit.

6. The method of claim 5, further comprising:

   maintaining first, second and third queues for the particular data object, each queue comprising a sequence of slots, wherein received base edits and staging edits are respectively entered into the first and second queues in slots, the first queue maintaining a global view of a time-ordered sequence of edits made to the particular data object stored in the database, the second queue maintaining a user-specific view of staging edits offset in the second queue based on a number of prior base edits on the particular data object, wherein the third queue comprises a merged version of the first and second queues, wherein the index is based on the third queue.

7. The method of claim 6, wherein the third queue gives priority for staging edits in the second queue over base edits in the first queue in the corresponding slot, a said base edit in the corresponding slot being entered into the next slot of the third queue.

8. The method of any preceding claim, further comprising:

receiving a search request for another data object from the first user;

determining from the index that there is no user staging version of the another data object stored in the memory space for the first user; and

returning the another data object stored in the database or a search result which includes the another data object stored in the database.

9. The method of any preceding claim, further comprising:

receiving a search request for the particular data object from a second user; and

determining from the index if there are any user staging versions of the particular data object for the second user, ignoring any user staging versions for the first user; and

responsive to a positive determination, returning search results which include one or more user staging versions of the particular data object for the second user and not the particular data object stored in the database.

10. The method of claim 9, wherein responsive to a negative determination, returning the particular data object stored in the database, or a search result which includes the particular data object stored in the database.

11. The method of any preceding claim, further comprising generating metadata for the particular data object and its one or more staging versions including an identifier field, wherein the one or more staging versions comprise an identifier indicative of a staging version.

12. A computer program, optionally stored on a non-transitory computer readable medium program which, when executed by one or more processors of a data processing apparatus, causes the data processing apparatus to carry out a method according to any preceding claim.

13. Apparatus configured to carry out a method according to any of claims 1 to 11, the apparatus comprising one or more processors or special-purpose computing hardware.

Fig. 1

EP 4 779 486 A1

Server 152

Internet 151

ISP 150

148

Local Network 147

Host 149

137

Main memory 140

ROM 141

Storage device 142

BUS 138

Communication interface 146

Processor 139

Display 143

Input device 144

Cursor control 145

*Fig. 2*

300

| ID | Name | Dept | Title | Login |
|---|---|---|---|---|
| 001 | Richard | Sales | Manager | rcd123 |
| 002 | Jason | Accounts | Assistant | jsn321 |
| 003 | | | | |
| 004 | | | | |

302

304

*Fig. 3*

Index

Document

308

306

EP 4 779 486 A1

*Fig. 4*

Fig. 6

Fig. 5

$t_1$     $t_2$     $t_3$

Workstate
Base Edit 1   706   Edit 1   710   Base Edit 2

702

$P_0 \rightarrow V_1$
$P_1 \rightarrow W_1$

$P_0 \rightarrow V_{1'}$

$P_0 \rightarrow V_2$
$P_1 \rightarrow W_2$

Data Object   704   Data Object   708   Workstate A   708   Workstate A

700

$P_0 : V_0$
$P_1 : W_0$

$P_0 \rightarrow V_1$
$P_1 \rightarrow W_1$

$P_0 \rightarrow V_{1'}$
$P_1 \rightarrow W_1$

$\{P_0\}$

$P_0 \rightarrow V_{1'}$
$P_1 \rightarrow W_2$

$\{P_0\}$

Fig. 7

800

Data Object

$P_0 \rightarrow V_2$
$P_1 \rightarrow W_2$

708

Workstate A

$P_0 \rightarrow V_{1'}$
$P_1 \rightarrow W_2$

Fig. 8

**Fig. 9**

**Fig. 10**

11.1 — RECEIVE FROM A FIRST USER A REQUEST TO CREATE A STAGING EDIT TO A PARTICULAR DATA OBJECT

11.2 — CREATE A USER STAGING VERSION OF THE PARTICULAR DATA OBJECT INCLUDING THE STAGING EDIT WITHOUT EDITING THE PARTICULAR DATA OBJECT

11.3 — STORE THE STAGING EDIT IN A MEMORY SPACE

11.4 — INDEXING THE USER STAGING VERSION

11.5 — ENABLING USER SEARCHING AND RETRIEVAL OF THE USER STAGING VERSION

*Fig. 11*

EUROPEAN SEARCH REPORT

Application Number

EP 26 17 4753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/365612 A1 (SPOFFORD ROSE WEINER [US] ET AL) 20 December 2018 (2018-12-20) * the whole document * | 1-13 | INV. G06F16/11 G06F16/2455 |
| A | HASAN ABBASI ET AL: "Extending I/O through high performance data services", CLUSTER COMPUTING AND WORKSHOPS, 2009. CLUSTER '09. IEEE INTERNATIONAL CONFERENCE ON, IEEE, PISCATAWAY, NJ, USA, 31 August 2009 (2009-08-31), pages 1-10, XP031547959, ISBN: 978-1-4244-5011-4 * the whole document * | 1-13 | |
| A | WO 02/097658 A2 (INTELLIGENTAPPS LTD [GB]; MARTIN PAUL MAXWELL [GB] ET AL.) 5 December 2002 (2002-12-05) * the whole document * | 1-13 | |
| A | US 7 478 099 B1 (GANDHI RAJESH K [US] ET AL) 13 January 2009 (2009-01-13) * the whole document * | 1-13 | TECHNICAL FIELDS SEARCHED (IPC) |
| A | US 2007/124317 A1 (DETTINGER RICHARD D [US] ET AL) 31 May 2007 (2007-05-31) * the whole document * * paragraph [0022] - paragraph [0058] * | 1-13 | G06F G06Q |

The present search report has been drawn up for all claims

| Place of search | Date of completion of the search | Examiner |
|---|---|---|
| The Hague | 15 June 2026 | Warry, Lawrence |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 26 17 4753

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2026

| Patent document cited in search report | Publication date | Patent family member(s) | | Publication date |
|---|---|---|---|---|
| US 2018365612 A1 | 20-12-2018 | NONE | | |
| WO 02097658 A2 | 05-12-2002 | EP | 1399839 A2 | 24-03-2004 |
| | | US | 2002184260 A1 | 05-12-2002 |
| | | WO | 02097658 A2 | 05-12-2002 |
| US 7478099 B1 | 13-01-2009 | NONE | | |
| US 2007124317 A1 | 31-05-2007 | US | 2007124317 A1 | 31-05-2007 |
| | | US | 2009100034 A1 | 16-04-2009 |

EPO FORM P0459

For more details about this annex : see Official Journal of the European Patent Office, No. 12/82